# EUROPÄISCHE PATENTSCHRIFT

(11) **EP 2 707 624 B1**
(45) Veröffentlichungstag und Bekanntmachung des Hinweises auf die Patenterteilung: **05.08.2015**
(21) Anmeldenummer: 12727255.7
(22) Anmeldetag: 23.04.2012
(51) Int. Cl.: F16F 15/123, F16F 15/129

(54) **TORSIONSSCHWINGUNGSDÄMPFER**
TORSIONAL VIBRATION DAMPER
AMORTISSEUR DE VIBRATION DE TORSION

(30) Priorität: 11.05.2011 DE 102011101135
(43) Veröffentlichungstag der Anmeldung: 19.03.2014
(73) Patentinhaber: Schaeffler Technologies AG & Co. KG, 91074 Herzogenaurach (DE)
(72) Erfinder: FOHR, Alexis, F-67500 Haguenau (FR); URBAN, Julien, F-67660 Betschdorf (FR)
(86) Internationale Anmeldenummer: PCT/DE2012/000414
(87) Internationale Veröffentlichungsnummer: WO 2012/152244

(56) Entgegenhaltungen:
- EP-A1- 0 732 524
- DE-A1- 3 616 163
- DE-A1- 3 616 301
- DE-A1- 3 942 610
- DE-A1- 19 526 053
- DE-A1- 19 704 451
- FR-A1- 2 242 606

## Beschreibung

Die Erfindung betrifft einen Torsionsschwingungsdämpfer in einer Reibungskupplung mit einer eingangsseitigen, Reibbeläge tragenden Mitnehmerscheibe und einer ausgangsseitigen, innenverzahnten, ein Flanschteil drehschlüssig aufnehmenden Nabe, einem zwischen diesen in Umfangsrichtung angeordneten, während eines Verdrehspiels zwischen Nabe und Flanschteil wirksamen Vordämpfer mit einem aus Kunststoff gebildeten, axial zwischen Flanschteil und Mitnehmerscheibe angeordneten, eingangsseitig und ausgangsseitig verspannbaren Schraubenfedern geringer Steifigkeit enthaltenden Federkäfig und einem nach Aufbrauch des Verdrehspiels wirksamen Hauptdämpfer mit eingangsseitig und ausgangsseitig verspannbaren Schraubenfedern höherer Steifigkeit und einer Reibeinrichtung, die zumindest aus einander zugewandten und axial vorgespannten Reibflächen des Federkäfigs und der Mitnehmerscheibe gebildet ist.

Die DE 39 42 610 A1 zeigt einen Torsionsschwingungsdämpfer in Form einer Kupplungsscheibe mit Reibbelägen zur Bildung eines Reibschlusses mit einer Reibungskupplung und einer Nabe zur drehschlüssigen Verbindung mit einer Getriebeeingangswelle eines Getriebes. Als Eingangsteil des Torsionsschwingungsdämpfers dienen zwei miteinander verbundene und axial beabstandete Mitnehmerscheiben, zwischen denen ein an einem Außenprofil der Nabe mit Verdrehspiel aufgenommenes Flanschteil aufgenommen ist. In dem Torsionsschwingungsdämpfer ist ein Vordämpfer vorgesehen, bei dem in einem Federkäfig aus Kunststoff Schraubenfedern aufgenommen sind, die im Bereich des Verdrehspiels zwischen Flanschteil und Nabe komprimiert werden. Nach Aufbrauch des Verdrehspiels wird der Hauptdämpfer wirksam, der aus zwischen den Mitnehmerscheiben und dem Flanschteil in Umfangsrichtung verspannbaren Schraubenfedern gebildet ist, die eine größere Steifigkeit aufweisen als die Schraubenfedern des Vordämpfers. Bei der Verdrehung des Flanschteils gegenüber den Mitnehmerscheiben wird der Komprimierung der Schraubenfedern des Hauptdämpfers eine Reibeinrichtung parallel geschaltet, die zumindest durch den vom Flanschteil gegenüber einer Mitnehmerscheibe mitgenommenen und axial vorgespannten Federkäfig gebildet wird. Infolge der Ausbildung des Federkäfigs aus Kunststoff ergibt sich eine Stahl/Kunststoff-Reibpaarung, die einen nicht ausreichenden Reibkoeffizienten ausbildet. Beschichtungen der Reibfläche des Federkäfigs haben sich als aufwendig und wenig beständig erwiesen.Weitere Torsionsschwingungsdämpfer sind beispielsweise aus der DE 195 26 053A1, der DE 197 04 451A1 und der DE 36 16 163A1 bekannt.

Aufgabe der Erfindung ist daher, einen Torsionsschwingungsdämpfer der genannten Gattung mit einer bezüglich ihrer Wirksamkeit verbesserten Reibeinrichtung vorzuschlagen.

Die Aufgabe wird durch einen Torsionsschwingungsdämpfer in einer Reibungskupplung mit einer eingangsseitigen, Reibbeläge tragenden Mitnehmerscheibe und einer ausgangsseitigen, innenverzahnten, ein Flanschteil drehschlüssig aufnehmenden Nabe, einem zwischen diesen in Umfangsrichtung angeordneten, während eines Verdrehspiels zwischen Nabe und Flanschteil wirksamen Vordämpfer mit einem aus Kunststoff gebildeten, axial zwischen Flanschteil und Mitnehmerscheibe angeordneten, eingangsseitig und ausgangsseitig verspannbaren Schraubenfedern geringer Steifigkeit enthaltenden Federkäfig und einem nach Aufbrauch des Verdrehspiels wirksamen Hauptdämpfer mit eingangsseitig und ausgangsseitig verspannbaren Schraubenfedern höherer Steifigkeit und einer Reibeinrichtung, die zumindest aus einander zugewandten und axial vorgespannten Reibflächen des Federkäfigs und der Mitnehmerscheibe gebildet ist, gelöst, wobei die Reibfläche des Federkäfigs aus einem mit diesem verbundenen Stahlteil gebildet ist, wobei das Stahlteil mittels radial außen um den Federkäfig gelegter Laschen an dem Federkäfig verrastet ist. Durch die Ausbildung einer Stahl/StahlReibpaarung wird der Reibkoeffizient verbessert. Durch entsprechende Materialeinsparungen am Federkäfig aus Kunststoff kann eine bauraumneutrale Lösung erzielt werden.

Gemäß dem erfinderischen Gedanken kann das Stahlteil mit dem Federkäfig drehfest verbunden sein. In einer vorteilhaften Weiterbildung kann eine verschleppte Reibung der Reibeinrichtung vorgeschlagen werden, indem das Stahlteil mit dem Federkäfig unter Einhaltung eines weiteren Verdrehspiels drehschlüssig verbunden ist. Auf diese Weise wird zuerst bei Relativverdrehung des Flanschteils gegenüber der Mitnehmerscheibe nach Aufbrauch des ersten Verdrehspiels zwischen Nabe und Flanschteil das Stahlteil auf dem Federkäfig verdreht und mit der Mitnehmerscheibe verdreht, wobei ein Reibmoment mit geringem Reibkoeffizienten zwischen dem Federkäfig und dem Stahlteil ausgebildet wird. Nach Aufbrauch des zugrunde liegenden Verdrehspiels wird das Stahlteil beispielsweise mittels Anschlägen von dem Flanschteil mitgenommen und wird gegenüber der Mitnehmerscheibe verdreht, so dass sich ein Reibmoment der Stahl/Stahl-Reibpaarung mit großem Reibkoeffizienten ausbildet.

Die Verbindung zwischen Stahlteil und Federkäfig kann beispielsweise durch Vernietung erfolgen. Insbesondere zur Bereitstellung einer verschleppten Reibung wird in bevorzugter Weise ein Drehschluss eingesetzt, beidem das Stahlteil mittels radial außen um den Federkäfig gelegter Laschen an dem Federkäfig verrastet ist. Zur Beibehaltung der radialen Abmessungen des Federkäfigs kann der Federkäfig im Bereich der Laschen radial nach innen eingeschnittene Ausnehmungen aufweisen. Je nach Ausbildung einer drehfesten oder spielbehafteten Anbindung des Stahlteils an den Federkäfig können die Ausnehmungen gegenüber den Laschen Anschläge ohne Spiel oder mit Umfangsspiel aufweisen.

Die Erfindung wird anhand des in den Figuren 1 bis 3 dargestellten Ausführungsbeispiels näher erläutert. Dabei zeigen:
- Figur 1: einen Schnitt durch den vorgeschlagenen, in einer Reibungskupplung montierten Torsionsschwingungsdämpfer,
- Figur 2: ein Detail des Torsionsschwingungsdämpfers der Figur 1 im Schnitt und
- Figur 3: eine Ansicht des mit einem Stahlteil versehenen Federkäfigs.

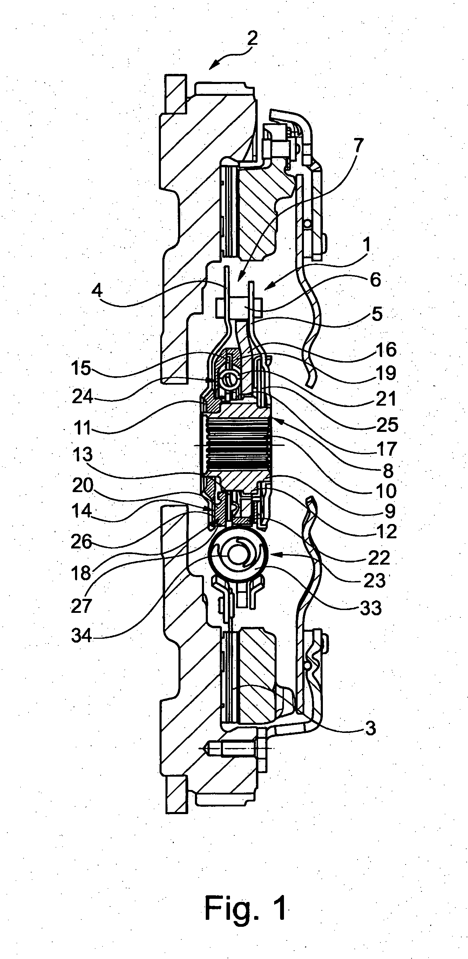

Figur 1 zeigt den in der Reibungskupplung 2 montierten Torsionsschwingungsdämpfer 1 im Schnitt. Eingangsseitig weist der Torsionsschwingungsdämpfer 1 die mit der Reibungskupplung in Reibeingriff stehenden Reibbeläge 3 auf, die drehfest mit der Mitnehmerscheibe 4 verbunden sind. Die Mitnehmerscheibe 4 und die zu dieser axial beabstandete und mittels der Niete 6 fest verbundene Mitnehmerscheibe 5 bilden das Eingangsteil 7 des Torsionsschwingungsdämpfers 1. Das Ausgangsteil 8 wird durch die Nabe 9 mit der Innenverzahnung 10 zur drehfesten Aufnahme an einer nicht dargestellten Getriebeeingangswelle eines Getriebes gebildet. Auf dem Außenumfang der Nabe 9 ist mittels des Zentrierkonus 11 die Mitnehmerscheibe 4 zentriert und verdrehbar aufgenommen. Weiterhin weist die Nabe 9 das Außenprofil 12 auf, in das mittels entsprechender Gegenprofilierungen 13, 17 das Flanschteil 15 des Vordämpfers 14 drehfest und das Flanschteil 16 des Hauptdämpfers 23 mit Verdrehspiel eingehängt sind.

Der Vordämpfer 14 besteht aus dem Federkäfig 18, der aus den beiden aus Kunststoff, beispielsweise Polyamid und dergleichen hergestellten Käfigteilen 19, 20 gebildet ist, und den von diesem aufgenommen Schraubenfedern 21 sowie dem diese beaufschlagenden Flanschteil 15. Die Käfigteile 19, 20 sind miteinander verbunden und beaufschlagen stirnseitig die über den Umfang verteilten Schraubenfedern 21 an einer Seite, während das Flanschteil 15 die Schraubenfedern stirnseitig an der gegenüberliegenden Stirnseite beaufschlagt. Der Federkäfig 18 ist mittels der axial erweiterten, in das Flanschteil 16 eingreifenden Arme 22 drehfest mit dem Flanschteil 16 verbunden. Hierdurch ist der Vordämpfer 14 über den Verdrehwinkel des mittels der Gegenprofilierung 17 des Flanschteils 16 und des Außenprofils 12 der Nabe 9 eingestellten Verdrehspiels wirksam und wird bei größeren Verdrehwinkeln zwischen Flanschteil 16 und Mitnehmerscheibe 4 vom Flanschteil 16 mitgenommen. Hieraus resultiert eine Relativbewegung zwischen dem Käfigteil 20 und der Mitnehmerscheibe 4, die als Reibeinrichtung 24 dem Hauptdämpfer 23 überlagert ist. Hierzu ist der Federkäfig 18 über das axial schwimmende Flanschteil 16 mittels der Tellerfeder 25 axial vorgespannt. Der Hauptdämpfer 23 ist durch jeweils stirnseitige Beaufschlagung der Schraubenfedern 33, 34 durch das Flanschteil 16 und die Mitnehmerscheiben 4, 5 wirksam.

Zur Ausbildung eines ausreichenden Reibmoments zwischen Federkäfig 18 und Mitnehmerscheibe 4 ist an dem Käfigteil 20 das Stahlteil 26 angeordnet, das zwischen dem Federkäfig 18 und der Mitnehmerscheibe 4 einen Stahl/Stahl-Reibeingriff mit entsprechend gegenüber einer Stahl/Kunststoff-Reibpaarung erhöhtem Reibkoeffizienten ausbildet. Je nach vorgesehener Ausbildung des Reibkontakts ist das Stahlteil 26 mittels der Laschen 27 drehfest oder mit Verdrehspiel aufgenommen.

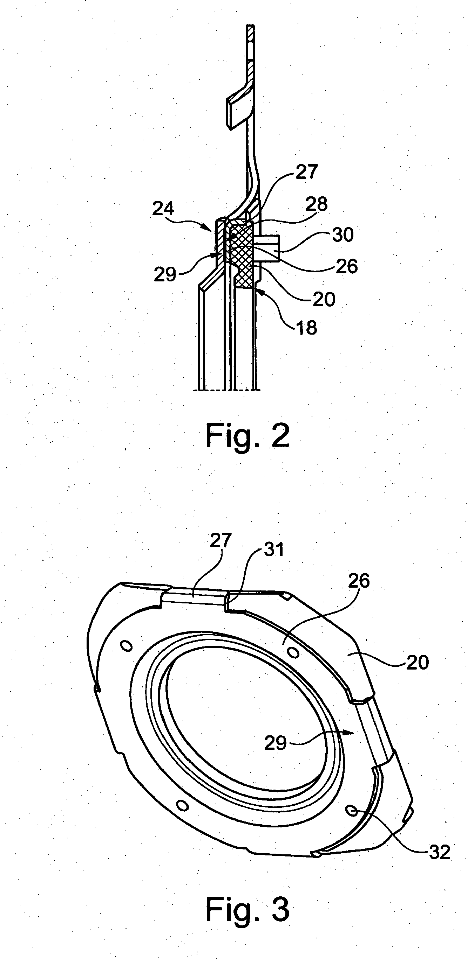

Die Figuren 2 und 3 zeigen die Ausbildung der Reibeinrichtung 24 im Detail anhand eines Schnitts und einer Ansicht. Figur 2 zeigt die Mitnehmerscheibe 4 mit der Reibfläche 28 und das auf dem Käfigteil 20 des Federkäfigs 18 angeordnete Stahlteil 26 mit der Reibfläche 29. Das Stahlteil 26 ist mittels der das Käfigteil 20 radial übergreifenden Laschen 27 mit dem Käfigteil 20 verrastet. Die Laschen 30 des Käfigteils 20 bilden die drehfeste Verbindung mit dem Käfigteil 19 (Figur 1).

Figur 3 zeigt das auf dem Käfigteil 20 aufgenommene Stahlteil 26 mit der Reibfläche 29. In dem gezeigten Ausführungsbeispiel sind an dem Käfigteil 20 nach radial innen ausgesparte Ausnehmungen 31 vorgesehen, in die die vier über den Umfang verteilten, an dem Stahlteil 26 radial erweitert vorgesehenen und anschließend umgelegten Laschen 27 eingeschnappt werden. Durch die passgenauen Anschläge der Ausnehmungen 31 ist kein Verdrehspiel zwischen Stahlteil 26 und Käfigteil vorgesehen. In weiteren Ausführungsbeispielen können die Ausnehmungen gegenüber den Laschen in Umfangsrichtung erweitert und damit ein Verdrehspiel eingestellt sein. Im Weiteren sind an der Reibfläche 29 über den Umfang verteilte und radial leicht erhabene Noppen 32 vorgesehen, die beispielsweise ein Verbacken der Reibfläche 29 und der Reibfläche 28 (Figur 2) verhindern.

### Bezugszeichenliste

- 1: Torsionsschwingungsdämpfer
- 2: Reibungskupplung
- 3: Reibbelag
- 4: Mitnehmerscheibe
- 5: Mitnehmerscheibe
- 6: Niet
- 7: Eingangsteil
- 8: Ausgangsteil
- 9: Nabe
- 10: Innenverzahnung
- 11: Zentrierkonus
- 12: Außenprofil
- 13: Gegenprofilierung
- 14: Vordämpfer
- 15: Flanschteil
- 16: Flanschteil
- 17: Gegenprofilierung
- 18: Federkäfig
- 19: Käfigteil
- 20: Käfigteil
- 21: Schraubenfeder
- 22: Arm
- 23: Hauptdämpfer
- 24: Reibeinrichtung
- 25: Tellerfeder
- 26: Stahlteil
- 27: Lasche
- 28: Reibfläche
- 29: Reibfläche
- 30: Lasche
- 31: Ausnehmung
- 32: Noppe
- 33: Schraubenfeder
- 34: Schraubenfeder

## Patentansprüche

1. Torsionsschwingungsdämpfer (1) in einer Reibungskupplung (2) mit einer eingangsseitigen, Reibbeläge (3) tragenden Mitnehmerscheibe (4) und einer ausgangsseitigen, innenverzahnten, ein Flanschteil (16) drehschlüssig aufnehmenden Nabe (9), einem zwischen diesen in Umfangsrichtung angeordneten, während eines Verdrehspiels zwischen Nabe (9) und Flanschteil (16) wirksamen Vordämpfer (14) mit einem aus Kunststoff gebildeten, axial zwischen Flanschteil (16) und Mitnehmerscheibe (4) angeordneten, eingangsseitig und ausgangsseitig verspannbaren Schraubenfedern (21) geringer Steifigkeit enthaltenden Federkäfig (18) und einem nach Aufbrauch des Verdrehspiels wirksamen Hauptdämpfer (23) mit eingangsseitig und ausgangsseitig verspannbaren Schraubenfedern (33, 34) höherer Steifigkeit und einer Reibeinrichtung (24), die zumindest aus einander zugewandten und axial vorgespannten Reibflächen (28, 29) des Federkäfigs (18) und der Mitnehmerscheibe (4) gebildet ist, wobei die Reibfläche (29) des Federkäfigs (18) aus einem mit diesem verbundenen Stahlteil (26) gebildet ist, **dadurch gekennzeichnet, daß** das Stahlteil (26) mittels radial außen um den Federkäfig (18) gelegter Laschen (27) an dem Federkäfig (18) verrastet ist.

2. Torsionsschwingungsdämpfer (1) nach Anspruch 1, **dadurch gekennzeichnet, dass** der Federkäfig (18) im Bereich der Laschen (27) radial nach innen eingeschnittene Ausnehmungen (31) aufweist.

3. Torsionsschwingungsdämpfer (1) nach Anspruch 1 oder 2, **dadurch gekennzeichnet, dass** das Stahlteil (26) mit dem Federkäfig (18) drehfest verbunden ist.

4. Torsionsschwingungsdämpfer (1) nach einem der Ansprüche 1 bis 3, **dadurch gekennzeichnet, dass** das Stahlteil (26) mit dem Federkäfig (18) unter Einhaltung eines weiteren Verdrehspiels drehschlüssig verbunden ist.

## Claims

1. Torsional vibration damper (1) in a friction clutch (2) having an input-side driver plate (4) which carries friction linings (3) and an output-side, internally toothed hub (9) which receives a flange part (16) in a rotationally locking manner, a preliminary damper (14) which is arranged between them in the circumferential direction, is active during a rotational play between the hub (9) and the flange part (16), having a spring cage (18) which is configured from plastic, is arranged axially between the flange part (16) and the driver plate (4), and contains helical springs (21) of low stiffness which can be braced on the input side and on the output side, and a main damper (23) which is active after the rotational play has been used up, having helical springs (33, 34) of greater stiffness which can be braced on the input side and on the output side, and a frictional device (24) which is formed at least from mutually facing and axially prestressed frictional faces (28, 29) of the spring cage (18) and the driver plate (4), the frictional face (29) of the spring cage (18) being formed from a steel part (26) which is connected to the latter, **characterized in that** the steel part (26) is latched on the spring cage (18) by means of brackets (27) which are placed radially on the outside around the spring cage (18).

2. Torsional vibration damper (1) according to Claim 1, **characterized in that** the spring cage (18) has recesses (31) which are cut radially inwards in the region of the brackets (27).

3. Torsional vibration damper (1) according to Claim 1 or 2, **characterized in that** the steel part (26) is connected fixedly to the spring cage (18) so as to rotate with it.

4. Torsional vibration damper (1) according to one of Claims 1 to 3, **characterized in that** the steel part (26) is connected to the spring cage (18) in a rotationally locking manner with a further rotational play being maintained.

## Revendications

1. Amortisseur de vibrations de torsion (1) dans un embrayage à friction (2) comprenant un disque d'entraînement (4) du côté de l'entrée, portant des garnitures de friction (3) et un moyeu (9) du côté de la sortie, à denture interne, recevant de manière solidaire en rotation une partie de bride (16), un pré-amortisseur (14) disposé entre ceux-ci dans la direction périphérique, agissant pendant un jeu de rotation entre le moyeu (9) et la partie de bride (16), avec une cage de ressort (18) réalisée en plastique, disposée axialement entre la partie de bride (16) et le disque d'entraînement (4), comportant des ressorts hélicoïdaux (21) de faible rigidité pouvant être serrés du côté de l'entrée et du côté de la sortie, et un amortisseur principal (23) agissant après la suppression du jeu de rotation avec des ressorts hélicoïdaux (33, 34) de plus grande rigidité pouvant être serrés du côté de l'entrée et du côté de la sortie et un dispositif de friction (24), qui est formé au moins à partir de surfaces de friction (28, 29) de la cage de ressort (18) et du disque d'entraînement (4) tournées l'une vers l'autre et précontraintes axialement, la surface de friction (29) de la cage de ressort (18) étant formée d'une pièce en acier (26) connectée à celle-ci, **caractérisé en ce que** la pièce en acier (26) s'encliquète sur la cage de ressort (18) au moyen de pattes (27) placées radialement à l'extérieur autour de la cage de ressort (18).

2. Amortisseur de vibrations de torsion (1) selon la revendication 1, **caractérisé en ce que** la cage de ressort (18) présente, dans la région des pattes (27), des évidements (31) découpés radialement vers l'intérieur.

3. Amortisseur de vibrations de torsion (1) selon la revendication 1 ou 2, **caractérisé en ce que** la pièce en acier (26) est connectée de manière solidaire en rotation à la cage de ressort (18).

4. Amortisseur de vibrations de torsion (1) selon l'une quelconque des revendications 1 à 3, **caractérisé en ce que** la pièce en acier (26) est connectée de manière solidaire en rotation à la cage de ressort (18) en conservant un jeu de rotation supplémentaire.
